# EUROPEAN PATENT SPECIFICATION

(11) **EP 4 055 247 B1**
(45) Date of publication and mention of the grant of the patent: **25.11.2026**
(21) Application number: 20885909.0
(22) Date of filing: 06.11.2020
(51) Int. Cl.: B24C 1/04, B24C 3/32, B24C 9/00, E21B 29/12, B24C 1/00, E02B 17/00

(54) **A SYSTEM AND METHOD FOR CUTTING OF OFFSHORE STRUCTURES**
SYSTEM UND VERFAHREN ZUM SCHNEIDEN VON OFFSHORE-STRUKTUREN
SYSTÈME ET PROCÉDÉ DE COUPE DE STRUCTURES EN MER

(30) Priority: 06.11.2019 MY PI2019006497
(43) Date of publication of application: 14.09.2022
(73) Proprietor: Petroliam Nasional Berhad (Petronas), 50088 Kuala Lumpur (MY)
(72) Inventor: THIYAHUDDIN, Mohd Izzat Mohd, Kuala Lumpur, 50088 (MY)
(74) Representative: Marks & Clerk LLP
(86) International application number: PCT/MY2020/050136
(87) International publication number: WO 2021/091368

(56) References cited:
- WO-A1-2009/122203
- US-A- 4 447 952
- US-A- 4 447 952
- US-A1- 2012 137 846
- US-A1- 2014 157 963
- US-A1- 2015 337 634
- US-A1- 2018 291 697
- GETU H. ET AL.: "Thermal analysis of cryogenically assisted abrasive jet micromachining of PDMS", INTERNATIONAL JOURNAL OF MACHINE TOOLS AND MANUFACTURE, vol. 9, 2011, pages 721 - 730, XP028100588, DOI: 10.1016/j.ijmachtools.2011.05.003
- EUGEN HERGHELEGIU, CRINA RADU, CAROL SCHNAKOVSZKY, ION CRISTEA: "Influence of the Distance between the Cutting Head and Working Sample on the Geometric Precision in Water Jet Abrasive Cutting Process", APPLIED MECHANICS AND MATERIALS, vol. 371, 1 August 2013 (2013-08-01), CH , pages 240 - 244, XP009536121, ISSN: 1662-7482, DOI: 10.4028/www.scientific.net/AMM.371.240

## Description

### Field of the Invention

The invention relates to offshore structures such as pylons, well heads and other steel structures located offshore including those located underwater. Specifically the invention relates to the means of cutting these structures above or below seabed.

### Background

In conducting maintenance or site reparation, it is necessary to cut through steel structures whilst underwater and, for offshore conditions, at significant depth. The cutting may be for the purpose of repairing the structure or for its removal. Further, in order to avoid a structure projecting from the sea bed, it may be necessary to cut below the level of the sea bed.

Several techniques have been used including hydraulic shears, being mechanical severing devices, particularly for relatively thin material such as less than 50mm. More difficult and complex techniques include shaped explosive charges, laser cutting and chemical attack, however none of these provide an efficient means of cutting underwater structures for various reasons.

The two most popular methods include diamond wire cutting and abrasive water jetting. For offshore applications, both require a significant deck area to support the equipment infrastructure. Further, diamond wire cutting requires divers and remotely operated vehicle, whereas abrasive water jetting requires a considerable amount of time (six to eight hours) in order to effect the cut.

WO 2009/122203 A1 discloses a system for cutting an underwater structure comprising a cutting head with an abrasive water jetting nozzle, wherein a water repelling shield is located about the cutting zone and arranged to hinder water entering said cutting zone. WO 2009/122203 A1 further discloses a method for cutting an underwater structure comprising the steps of: placing an abrasive water jetting nozzle forming a cutting head, positioning said cutting head proximate to the cutting surface, forming a cutting zone defined by tip of the abrasive water jetting nozzle and the cutting surface, locating a water repelling shield about said cutting zone and so hindering water entering said cutting zone, and cutting said cutting surface using an abrasive water jet emanating from said abrasive water jetting nozzle.

### Summary of Invention

**In** a first aspect the invention provides a system for cutting an underwater structure, the system comprising: a cutting head, said cutting head comprising: an abrasive water jetting nozzle; a cryogenic nozzle arranged to direct a cryogenic liquid onto a cutting surface to cool cryogenically said cutting surface beyond the ductile-brittle transition; said abrasive water jetting nozzle and cryogenic nozzle mounted in fixed spaced relation; said cutting head arranged to position tips of the nozzles proximate to a cutting surface, and arranged to form a cutting zone defined by the nozzle tips and cutting surface; wherein a water repelling shield is located about said cutting zone and arranged to hinder water entering said cutting zone.

**In** a second aspect the invention provides a method for cutting an underwater structure, the method comprising the steps of: placing an abrasive water jetting nozzle and a cryogenic nozzle in fixed spaced relation to form a cutting head, said cryogenic nozzle arranged to direct a cryogenic liquid onto a cutting surface of said structure; positioning said cutting head proximate to the cutting surface; forming a cutting zone defined by tips of the nozzles and the cutting surface; locating a water repelling shield about said cutting zone and so hindering water entering said cutting zone; cooling cryogenically said cutting surface beyond the ductile-brittle transition using the cryogenic liquid; and cutting said cutting surface using an abrasive water jet emanating from said abrasive water jetting nozzle.

Embodiments are provided as defined by the dependent claims.

Thus, a combination of features assist to make abrasive water jetting a viable option. Firstly, using cryogenic assistance to the water jetting by reducing the metal temperature to below the ductile-brittle transition. By making the steel brittle, its ability to absorb energy is reduced making the water jet more effective, and so able to act faster. Further, by introducing an air envelope, the surrounding water is prevented from raising the temperature of the steel, through efficient heat transfer, before the water jet can act.

### Brief Description of Drawings

It will be convenient to further describe the present invention with respect to the accompanying drawings that illustrate possible arrangements of the invention. Other arrangements of the invention are possible and consequently, the particularity of the accompanying drawings is not to be understood as superseding the generality of the preceding description of the invention.
Figure 1 is a schematic view of an offshore structure to be cut;
Figure 2 is a schematic view of a cutting process according to one embodiment of the present invention;
Figure 3 is an elevation view of a cutting system according to one embodiment of the present invention, and;
Figures 4A and 4B are various views of a cutting system according to a further embodiment of the present invention.

### Detailed Description

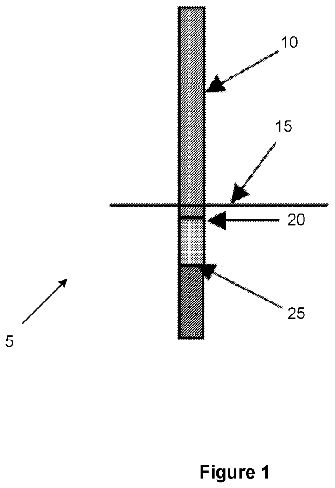

Figure 1 shows an elevation view of the type of underwater structure 5 to which the present invention is applicable. In particular, a jacket 10 comprising a tubular steel structure maybe embedded in the seabed 15. Embedment will inevitably create a soil plug 25 within the tubular structure. By way of example, the tubular steel structure 10 may have a 50mm wall thickness and, in order, to return the site to its original condition such that no structure projects from the seabed 15, a cut line 20 may be identified at, for instance, one to three meters below the seabed 15. It will be appreciated that given the cut line 20 is below the seabed 15, site preparation leading to the cutting process will depend upon the area around the jacket 10 that needs to be cleared in order to utilize the cutting system. Thus, a cutting system that is large and bulky, for instance, a hydraulic shear or diamond wire cutter will require additional preparation time extending the time for which the cutting process requires. In consideration of time taken to complete the task, given that conventional abrasive water jetting requires up to six to eight hours, there is a considerable amount of time that is required to provide support for the cutting process. If the entire project involves many such jackets 10, then it is clear such an approach may not be economically viable.

The present invention therefore involves two steps. It is accepted that abrasive water jetting is a useful technique for cutting steel, however the duration required under normal circumstances is problematic. By cryogenically freezing the steel structure just prior to the water jetting, a significant benefit may be achieved leading to a faster cutting process of the cryogenically brittle steel.

However, cryogenically freezing the steel is difficult in an underwater application. The present invention therefore further includes an air envelope and habitat surrounding a cryogenic nozzle and nozzle of the water jetting system.

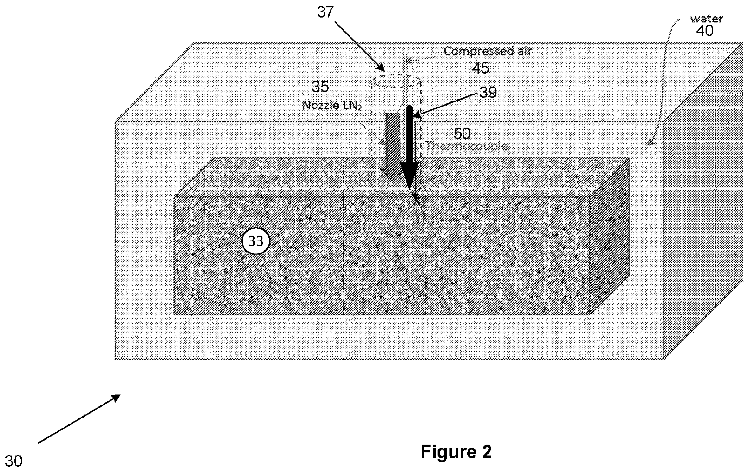

Figure 2 shows a schematic view of a cutting arrangement 30 whereby a cryogenic nozzle 35 applies liquid nitrogen to the cutting zone 37. Compressed air 45 is injected into the cutting zone which includes water jetting nozzle 39. The cutting zone 37 provides arid conditions in which to cool and cut the steel 33 whilst underwater 40. A thermocouple 50 may be provided within the cutting zone 37 so as to monitor temperature and ensure cryogenic conditions exist during the cutting process.

As discussed, an important consideration in cryogenically assisted water jetting is to ensure the material to be cut 33 remains brittle during cutting. At ambient temperatures, ductility of steel remains relatively constant. As the temperature of the metal is reduced, a ductile-brittle transition (DBT) is reached. As a non-limiting example, this transition may be in the range -90°C to -130°C. It will be appreciated that the ductile-brittle transition for a material may be different for each material, and so appropriate testing of the material may be required.

Whilst above ground applications of cryogenic assisted water jetting can be carried out relatively simply, heat transfer under water is such that any time lag between the introduction of liquid nitrogen and subsequent water jetting may be sufficient to elevate the temperature of the cutting zone above the ductile-brittle transition temperature. Accordingly, the introduction of an air envelope 37, which in this case is provided by the introduction of compressed air 45, removes water from the cutting zone 37 and thus limits heat gained through immersion in water, which is a more efficient heat transfer medium than air.

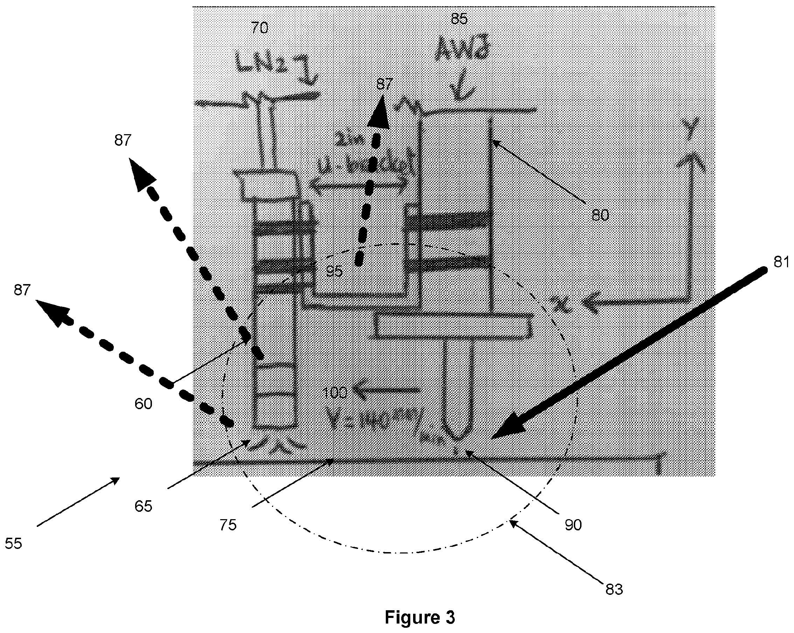

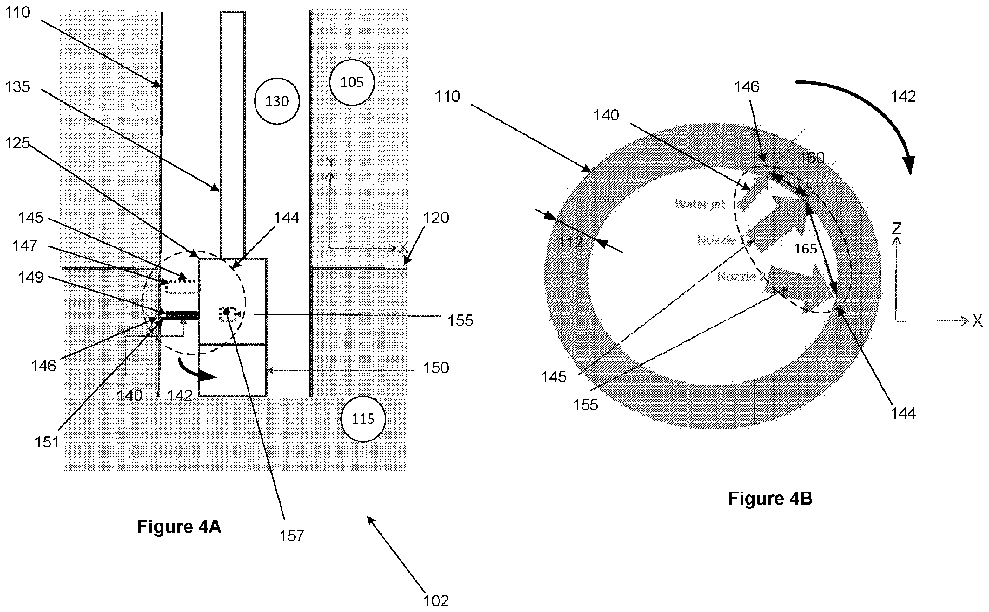

Figure 3 shows a cutting head 55 for underwater cryogenic assisted water jetting. Here a nozzle 60 directs 65 liquid nitrogen 70 onto a cutting surface 75. A bracket 95 is engaged with the cryogenic nozzle and a water jetting nozzle 80 directing 90 a stream of abrasive water jet 85 onto the cutting surface 75. The bracket acts to ensure the synchronized movement of the nozzles 60, 75, in spaced relation, being 50mm in this embodiment. The cutting head 55 is arranged to be moved 100 along the cutting surface 75 whereby the liquid nitrogen cryogenically cools the cutting surface 75 beyond the ductile-brittle transition so as to assist in the water cutting of the surface. It will be appreciated this movement may be linear for cutting flat plate, or rotational for cutting a cylindrical pipe or jacket. For a cylindrical pipe or jacket, the cutting head 55 may be directed outward for cutting an internal bore, or radially inward, for cutting from a peripheral circumference. A water repelling shield, in the form of a stream of compressed air 81 drives out water 87 from the cutting zone 83 so as to create arid conditions and thus avoid temperature increases in the cutting surface before the surface is able to be cut. Another form of water repelling shield may be used, including a physical barrier surrounding the cutting zone 83. The barrier may be purpose built to fit the type of cutting surface. Alternatively, as will be shown with reference to Figure 4A and 4B, the structure being cut may provide part, or all, of the water repelling shield. Further still, the water repelling shield may be in the form of a de-watering pump, drawing water away from the cutting zone. It will be appreciated that various combinations of compressed air, physical barrier and pumping may for the water repelling shield. The diameter of the nozzle for cryogenic liquid may be between 5mm to 50mm. The separation distance, either linear or circumferential, range of distance vary between 0.5cm to 20cm. The orientation angle of the cryogenic liquid nozzle makes relative to the target material to cut vary between 90° to 45° to allow better cooling distribution and reduce heat loss. The distance is required to allow adequate cooling for the metal to reach its Ductile Brittle Transition before severance operation by the abrasive water jet. Cutting nozzle stand-off range between 3mm to 5mm from the target material. The AWJ slurry could be mix near or far from the nozzle. Subsequently, the diameter nozzle of AWJ is set between 1mm to 3mm.

Figures 4A and 4B show an alternative embodiment 102. Here, a jacket 110 is located under water 105 and embedded in the seabed 115. In this embodiment the cutting head 125 is positioned within the bore 130 of the jacket 110. Further, the cutting head 125 is integrated with the soil plug removal tool 150, which includes a de-watering pump for evacuating the water and soil. The cutting head 125 includes a first nozzle 145 for directing liquid nitrogen proximate to the water jetting nozzle 140, which define a cutting zone 144 together with the cutting surface 146. The distance between the water jet nozzle 140 and cryogenic nozzles 145, 155, and in particular the various nozzle tips 147, 149, 157, may vary based upon in situ conditions and material to be cut. As a non-limiting example, the distance 160 between the water jet nozzle tip 149 and the first cryogenic nozzle 147 may be in the range 50 to 100mm. In a further embodiment, a lip or retaining surface 151 may be coupled to the water jetting nozzle 140, or arranged close thereto, such that the lip 151 is in close proximity to, or in contact with, the target material. The lip 151 is arranged to capture and retain a portion of the cryogenic fluid from the cryogenic nozzle 145 as excess cryogenic fluid falls from the nozzle or runs down the surface of the cutting surface. In this way, cryogenic fluid is retained for a longer period at the surface of the target material prior to full evaporation. It follows that the lip 151, therefore, maintains cryogenic conditions at the target surface for a longer period. The lip 151 may be made from a highly ductile material.

In this embodiment, a second cryogenic nozzle 155 is located circumferentially about the cutting tool from the water jet nozzle 140, the offset 165 between nozzle tips 149, 157 being in the range 100 to 200mm. Thus, it will be noted that in the position shown in Figure 4A as the cutting head 125 is rotated 142 the first cryogenic nozzle 145, having a nozzle tip 147 is positioned above the water jet nozzle 140, having a nozzle tip 149, and thus providing cryogenic conditions on a continuous basis proximate to the water jet nozzle 140. The second nozzle 155 acts in a similar manner to that of the embodiment of Figure 3 whereby the second nozzle 155 is in the same horizontal plane as the water jet nozzle 140 and precedes the water jet nozzle as the cutting tool is rotated 142. Thus, having two cryogenic nozzles operating proximate to the water jet, the second nozzle 155 reduces the temperature of the jacket wall 112 with the first nozzle 145 maintaining cryogenic conditions during the cutting process.

In the embodiment of Figures 4A and 4B, the air envelope is provided by de-watering the bore 130 of the jacket 110, and so the pump and the internal bore 130 form the water repelling shield for the cutting zone 144. The de-watering pump will need to be sufficient to accommodate water ingress through the base of the jacket during the cutting process. Thus, in this further embodiment the cutting tool and soil plug removal device 150 may include a water pump 135 of greater capacity than may be standard for pumping water out of the borer 130 in order to maintain arid conditions. It follows that integration with the soil plug device 150 provides the air envelope required for underwater cryogenic assisted water jetting.

As a note, the ability to place the cutting head 125 inside the jacket 110 means no site preparation is required around the jacket, unlike several of the prior art systems. Whether the cut is to be made above or below the seabed 120 is irrelevant, subject to the depth of the soil plug. In this embodiment, this is also managed by including the soil plug removal device 150.

## Claims

1. A system for cutting an underwater structure, the system comprising:
a cutting head (55), said cutting head (55) comprising:
an abrasive water jetting nozzle (80);
a cryogenic nozzle (60) arranged to direct liquid nitrogen (70) onto a cutting surface (75) of the underwater structure to cool cryogenically said cutting surface beyond the ductile-brittle transition;
said abrasive water jetting nozzle (80) and cryogenic nozzle (60) mounted in fixed spaced relation;
said cutting head (55) arranged to position tips of the abrasive water jetting nozzle (80) and the cryogenic nozzle (60) proximate to the cutting surface (75), and arranged to form a cutting zone (83) defined by the nozzle tips and the cutting surface (75);
wherein a water repelling shield (81) is located about said cutting zone (83) and arranged to hinder water entering said cutting zone.

2. The system according to claim 1, wherein the water repelling shield includes a nozzle to inject compressed air into the cutting zone (83), so as to drive water out of said cutting zone.

3. The system according to claim 1, wherein the water repelling shield includes a de-watering pump arranged to pump water from the cutting zone (83).

4. The system according to claim 2 or 3, wherein the water repelling shield includes at least a portion of the underwater structure forming a barrier against water entering the cutting zone (83).

5. The system according to any one of the preceding claims, said cutting head (55) further including a second cryogenic nozzle (155) and corresponding second cryogenic nozzle tip, said cutting zone (83, 144) extending to include said second nozzle tip.

6. The system according to claim 3, further including a soil plug removal tool (150) mounted to said cutting head (55), the de-watering pump mounted to the soil plug removal tool.

7. The system according to any one of the preceding claims, wherein said cutting head (55) is arranged to be placed within the bore of a jacket (110) and further arranged to be rotated during cutting of said jacket.

8. A method for cutting an underwater structure, the method comprising the steps of:
placing an abrasive water jetting nozzle (80) and a cryogenic nozzle (60) in fixed spaced relation to form a cutting head (55), said cryogenic nozzle (60) arranged to direct liquid nitrogen (70) onto a cutting surface (75) of said structure;
positioning said cutting head (55) proximate to the cutting surface (75);
forming a cutting zone (83) defined by tips of the abrasive water jetting nozzle (80) and the cryogenic nozzle (60) and the cutting surface (75);
locating a water repelling shield (81) about said cutting zone (83) and so hindering water entering said cutting zone (83);
cooling cryogenically said cutting surface (75) beyond the ductile-brittle transition using the liquid nitrogen (70); and
cutting said cutting surface (75) using an abrasive water jet (85) emanating from said abrasive water jetting nozzle (80).

9. The method according to claim 8, wherein the locating step includes the step of injecting compressed air into the cutting zone (83), and so driving water out of said cutting zone.

10. The method according to claim 8, wherein the locating step includes the step of pumping water out of the cutting zone (83).

11. The method according to any one of claims 8 to 10, wherein the structure is a jacket (110) having an internal bore, the positioning step including inserting the cutting head (55) into said internal bore.

## Patentansprüche

1. System zum Schneiden einer Unterwasserstruktur, wobei das System umfasst:
einen Schneidkopf (55), wobei der Schneidkopf (55) umfasst:
eine Abrasiv-Wasserstrahldüse (80);
eine Kryodüse (60), die so ausgebildet ist, dass sie flüssigen Stickstoff (70) auf eine Schneidfläche (75) der Unterwasserstruktur richtet, um die Schneidfläche kryogen über den Übergang vom duktilen zum spröden Zustand hinaus zu kühlen;
wobei die Abrasiv-Wasserstrahldüse (80) und die Kryodüse (60) in einem festen Abstand zueinander montiert sind;
wobei der Schneidkopf (55) so ausgebildet ist, dass er Spitzen der Abrasiv-Wasserstrahldüse (80) und der Kryodüse (60) nahe an der Schneidfläche (75) positioniert, und so ausgebildet ist, dass er eine Schneidzone (83) bildet, die durch die Düsenspitzen und die Schneidfläche (75) definiert ist;
wobei eine wasserabweisende Abschirmung (81) um die Schneidzone (83) herum angeordnet ist und so ausgebildet ist, dass sie das Eindringen von Wasser in die Schneidzone verhindert.

2. System nach Anspruch 1, wobei die wasserabweisende Abschirmung eine Düse zum Einblasen von Druckluft in die Schneidzone (83) einschließt, um so Wasser aus der Schneidzone herauszudrängen.

3. System nach Anspruch 1, wobei die wasserabweisende Abschirmung eine Entwässerungspumpe einschließt, die ausgebildet ist, um Wasser aus der Schneidzone (83) abzupumpen.

4. System nach Anspruch 2 oder 3, wobei die wasserabweisende Abschirmung mindestens einen Abschnitt der Unterwasserstruktur einschließt, der eine Barriere gegen das Eindringen von Wasser in die Schneidzone (83) bildet.

5. System nach einem der vorstehenden Ansprüche, wobei der Schneidkopf (55) ferner eine zweite kryogene Düse (155) und eine entsprechende zweite kryogene Düsenspitze einschließt, wobei sich die Schneidzone (83, 144) so erstreckt, dass sie die zweite Düsenspitze einschließt.

6. System nach Anspruch 3, ferner einschließend ein am Schneidkopf (55) montiertes Werkzeug (150) zum Entfernen von Bodenpfropfen, wobei die Entwässerungspumpe an dem Werkzeug zum Entfernen Bodenpfropfen montiert ist.

7. System nach einem der vorstehenden Ansprüche, wobei der Schneidkopf (55) so ausgebildet ist, dass er in die Bohrung eines Mantels (110) eingesetzt werden kann, und ferner so ausgebildet ist, dass er während des Schneidens des Mantels gedreht werden kann.

8. Verfahren zum Schneiden einer Unterwasserstruktur, wobei das Verfahren die folgenden Schritte umfasst:
Platzieren einer Abrasiv-Wasserstrahldüse (80) und einer Kryodüse (60) in festem Abstand, um einen Schneidkopf (55) zu bilden, wobei die Kryodüse (60) so ausgebildet ist, dass sie flüssigen Stickstoff (70) auf eine Schneidfläche (75) der Struktur richtet;
Positionieren des Schneidkopfes (55) nahe der Schneidfläche (75);
Bilden einer Schneidzone (83), die durch Spitzen der Abrasiv-Wasserstrahldüse (80) und der Kryodüse (60) sowie die Schneidfläche (75) definiert ist;
Anordnen einer wasserabweisenden Abschirmung (81) um die Schneidzone (83) herum, um so das Eindringen von Wasser in die Schneidzone (83) zu verhindern;
kryogenes Kühlen der Schnittfläche (75) mit flüssigem Stickstoff (70) über den Übergang vom duktilen zum spröden Zustand hinaus; und
Schneiden der Schneidfläche (75) unter Verwendung eines Abrasiv-Wasserstrahls (85), der aus der Abrasiv-Wasserstrahldüse (80) austritt.

9. Verfahren nach Anspruch 8, wobei der Schritt des Anordnens den Schritt des Einblasens von Druckluft in die Schneidzone (83) einschließt, um so Wasser aus der Schneidzone herauszudrängen.

10. Verfahren nach Anspruch 8, wobei der Schritt des Anordnens den Schritt des Abpumpens von Wasser aus der Schneidzone (83) einschließt.

11. Verfahren nach einem der Ansprüche 8 bis 10, wobei es sich bei der Struktur um einen Mantel (110), der einen Innenbohrung aufweist, handelt, der Schritt des Positionierens das Einführen des Schneidkopfes (55) in die Innenbohrung einschließt.

## Revendications

1. Système de découpe de structure sous-marine, le système comprenant :
une tête de coupe (55), ladite tête de coupe (55) comprenant :
une buse à jet d'eau abrasive (80) ;
une buse cryogénique (60) agencée pour diriger de l'azote liquide (70) sur une surface de coupe (75) de la structure sous-marine pour refroidir cryogéniquement ladite surface de coupe au-delà de la transition ductile-fragile ;
ladite buse à jet d'eau abrasive (80) et ladite buse cryogénique (60) étant montées dans une relation espacée fixe ;
ladite tête de coupe (55) agencée de manière à positionner les pointes de la buse à jet d'eau abrasive (80) et de la buse cryogénique (60) à proximité de la surface de coupe (75), et agencée de manière à former une zone de coupe (83) définie par les pointes des buses et la surface de coupe (75) ;
dans lequel un écran anti-eau (81) est situé autour de ladite zone de coupe (83) et agencé pour empêcher l'eau d'entrer dans ladite zone de coupe.

2. Système selon la revendication 1, dans lequel l'écran anti-eau inclut une buse pour injecter de l'air comprimé dans la zone de coupe (83), afin de chasser l'eau de ladite zone de coupe.

3. Système selon la revendication 1, dans lequel l'écran anti-eau inclut une pompe d'assèchement agencée pour pomper l'eau de la zone de coupe (83).

4. Système selon la revendication 2 ou 3, dans lequel l'écran anti-eau inclut au moins une partie de la structure sous-marine formant une barrière contre l'eau entrant dans la zone de coupe (83).

5. Système selon l'une quelconque des revendications précédentes, ladite tête de coupe (55) incluant en outre une seconde buse cryogénique (155) et une seconde pointe de buse cryogénique correspondante, ladite zone de coupe (83, 144) s'étendant pour inclure ladite seconde pointe de buse.

6. Système selon la revendication 3, incluant en outre un outil de retrait de bouchon de sol (150) monté sur ladite tête de coupe (55), la pompe d'assèchement montée sur l'outil de retrait de bouchon de sol.

7. Système selon l'une quelconque des revendications précédentes, dans lequel ladite tête de coupe (55) est agencée à être placée dans l'alésage d'un jacket (110) et agencée en outre à être tournée pendant la coupe dudit jacket.

8. Procédé de découpe d'une structure sous-marine, le procédé comprenant les étapes de :
placement d'une buse à jet d'eau abrasive (80) et d'une buse cryogénique (60) dans une relation espacée fixe pour former une tête de coupe (55), ladite buse cryogénique (60) étant agencée pour diriger l'azote liquide (70) sur une surface de coupe (75) de ladite structure ;
positionnement de ladite tête de coupe (55) à proximité de la surface de coupe (75) ;
formation d'une zone de coupe (83) définie par les extrémités de la buse à jet d'eau abrasive (80) et de la buse cryogénique (60) et la surface de coupe (75) ;
placement d'un écran anti-eau (81) autour de ladite zone de coupe (83) et ainsi empêcher l'eau d'entrer dans ladite zone de coupe (83) ;
refroidissement cryogénique de la surface de coupe (75) au-delà de la transition ductile-fragile à l'aide d'azote liquide (70) ; et
découpage de ladite surface de coupe (75) à l'aide d'un jet d'eau abrasif (85) émanant de ladite buse à jet d'eau abrasive (80).

9. Procédé selon la revendication 8, dans lequel l'étape de placement inclut l'étape d'injection d'air comprimé dans la zone de coupe (83), chassant ainsi l'eau de ladite zone de coupe.

10. Procédé selon la revendication 8, dans lequel l'étape de placement inclut l'étape de pompage de l'eau hors de la zone de coupe (83).

11. Procédé selon l'une quelconque des revendications 8 à 10, dans lequel la structure est un jacket (110) présentant un alésage interne, l'étape de positionnement incluant l'insertion de la tête de coupe (55) dans ledit alésage interne.
